# EUROPEAN PATENT APPLICATION

(11) **EP 4 647 166 A1**
(43) Date of publication of application: **12.11.2025**
(21) Application number: 24738660.0
(22) Date of filing: 02.01.2024
(51) Int. Cl.: B01L 3/00, G01N 35/00, G01N 21/84

(54) **CALIBRATION STRIP FOR IN VITRO DIAGNOSTIC DEVICE AND CALIBRATION METHOD USING SAME**

(30) Priority: 03.01.2023 KR 20230000860; 17.05.2023 KR 20230063812
(71) Applicant: SD Biosensor, Inc., Gyeonggi-do 16690 (KR)
(72) Inventor: CHO, Young Shik, Suwon-si, Gyeonggi-do 16690 (KR); PARK, Hyo Lim, Suwon-si, Gyeonggi-do 16690 (KR); KO, Hyun Geun, Suwon-si, Gyeonggi-do 16690 (KR); KIM, Dong Hun, Suwon-si, Gyeonggi-do 16690 (KR); WOO, Hyun Soo, Suwon-si, Gyeonggi-do 16690 (KR); KIM, Iek Lok, Suwon-si, Gyeonggi-do 16690 (KR)
(74) Representative: Eisenführ Speiser
(86) International application number: PCT/KR2024/000020
(87) International publication number: WO 2024/147589

(57) **Abstract**

The present invention relates to an improved calibration strip for an in vitro diagnostic device, the calibration strip having been improved so as to shorten calibration time and allow rapid determination of a calibration value without having to use a pigmented liquid. The calibration strip, which attaches to an in vitro diagnostic device, comprises: a strip body having a plurality of cells through which light generated from the in vitro diagnostic device passes when attached thereto; and a filter unit comprising first and second filters that are sequentially placed in respective cells and irradiated by the light that has passed through the plurality of cells.

## Description

### [Technical Field]

The present invention relates to a calibration strip for an in vitro diagnostics device.

### [Background Art]

In vitro diagnostics (IVD) devices are medical devices used to test clinical specimens (tissue cells, blood, urine, stool, saliva, etc.) taken from a human body for the purpose of diagnosis and prognosis of diseases, determination of health conditions, determination of the effectiveness of treating diseases, and prevention of diseases. An IVD device may include a diagnostic unit which tests a clinical specimen and a housing covering outer sides of the diagnostic unit.

In an in vitro diagnostics device, a device called a strip or cartridge which collects a clinical specimen is mounted and tests the clinical specimen, and the strip may include a collection part which collects clinical specimens and a channel part which is connected to the collection part and in which a plate, in which a channel is formed, is formed in a multi-layered structure. When the strip is mounted in the IVD device, the collection part is disposed outside the housing of the IVD device, and the channel part is disposed in the housing of the IVD device.

When the strip is mounted in the in vitro diagnostics device, an optical module disposed in the in vitro diagnostics device emits light toward the channel part of the strip. Accordingly, the in vitro diagnostics device may detect components and characteristics of a clinical specimen collected in the channel part of the strip.

However, in the conventional in vitro diagnostics devices, since an optical deviation occurs due to a deviation between light-emitting diodes (LEDs) of optical modules disposed in the in vitro diagnostics devices, there is a problem that test results are different even when light of the in vitro diagnostics devices is emitted to the same clinical specimen.

Accordingly, calibration for reducing an optical deviation due to components in LEDs of optical modules disposed in in vitro diagnostics devices is required, and a calibration strip for extracting data for the calibration has been invented.

However, in the conventional calibration strip, a method of correcting a deviation using a clinical specimen, a control solution, and a pigment is used. In the conventional calibration strip, when the clinical specimen, the control solution, and the pigment are used, since a deviation between strips and a deviation between materials can occur, and measurement for each concentration is required, there is a problem that calculation of a result is delayed.

### [Detailed Description of Invention]

### [Technical Problem]

An object to be solved by the present invention is directed to providing a calibration strip for an in vitro diagnostics device of which a measurement deviation is improved and which is improved such that a calibration time is reduced to quickly perform calibration even without using a liquid in which a clinical specimen, a control solution, and a pigment are used.

### [Technical Solution]

A calibration strip for an in vitro diagnostics device according to one embodiment of the present invention, which is installed in an in vitro diagnostics device, includes a strip body including a plurality of cells through which light passes and a filter unit including first filters and second filters which are disposed in the plurality of cells.

The first filters may be sequentially disposed in the plurality of cells, the second filters may be disposed between the first filters, and the first filters and the second filters may have different optical densities.

The first filters may include a 1-1 filter, a 1-2 filter, and a 1-3 filter which are disposed to be spaced apart from each other, and the optical densities may gradually decrease from the 1-1 filter to the 1-3 filter.

The first filters may include a 1-1 filter, a 1-2 filter, and a 1-3 filter which are disposed to be spaced apart from each other, and the optical densities may gradually increase from the 1-1 filter to the 1-3 filter.

The second filters may include a 2-1 filter disposed between the 1-1 filter and the 1-2 filter, and a 2-2 filter disposed between the 1-2 filter and the 1-3 filter, wherein the optical density of the 2-1 filter may be lower than that of the 2-2 filter.

The second filters may include a 2-1 filter disposed between the 1-1 filter and the 1-2 filter and a 2-2 filter disposed between the 1-2 filter and the 1-3 filter, wherein the optical density of the 2-1 filter may be higher than that of the 2-2 filter.

The 2-1 filter may have an optical density which is lower than that of the 1-1 filter and higher than that of the 1-2 filter, and the 2-2 filter may have an optical density which is lower than that of the 1-2 filter and higher than that of the 1-3 filter.

The 2-1 filter may have an optical density which is higher than that of the 1-1 filter and lower than that of the 1-2 filter, and the 2-2 filter may have an optical density which is higher than that of the 1-2 filter and lower than that of the 1-3 filter.

The strip body may include compartment protrusions to form the plurality of cells, and a first length of each of the cells may be the same as a second length of each of the first filters or the second filters.

The strip body may include movement-preventing protrusions which are disposed to face each other between the compartment protrusions and prevent movement of the first filters or the second filters, and a third length between the movement-preventing protrusions facing each other may be the same as a fourth length of the first filters or the second filters.

In addition, a calibration method according to one embodiment of the present invention includes selecting a reference device after mounting a calibration strip in each of a plurality of in vitro diagnostics devices and performing measurement, storing a measurement value measured in the reference device in a bar code plate of the calibration strip, mounting the calibration strip, in which the measurement value is stored, in devices other than the reference device, performing measurement, and generating calibration equations in the devices other than the reference device at the same time, and performing compensation by comparing measurement values measured in the devices other than the reference device and the measurement value measured in the reference device and stored in the bar code plate.

The selecting of the reference device after mounting the calibration strip in each of the plurality of in vitro diagnostics devices and performing the measurement may include mounting the calibration strip in each of the plurality of in vitro diagnostics devices, performing measurement, and then selecting a device having a value which is most similar to an average value calculated by summing a highest value and a lowest value and dividing a resultant value in half.

The performing of the compensation by comparing the measurement values measured in the devices other than the reference device and the measurement value measured in the reference device and stored in the bar code plate may include compensating a portion at which a difference occurs when graph lines calculated using the measurement values of the devices other than the reference device and a graph line calculated using the measurement value of the reference device are compared.

### [Advantageous Effects]

According to one embodiment of the present invention, since a solid-state filter with an optical density is used instead of the conventional method using a liquid in which a pigment is used, a detection time can be reduced by using a calibration strip.

### [Description of Drawings]

FIG. 1 is a perspective view illustrating a calibration strip for an in vitro diagnostics device according to one embodiment of the present invention.
FIG. 2 is an exploded perspective view illustrating the calibration strip for an in vitro diagnostics device according to one embodiment of the present invention.
FIG. 3 is an enlarged view illustrating portion A of FIG. 1.
FIG. 4 is a bottom perspective view illustrating the calibration strip.
FIG. 5 is a flowchart illustrating a calibration method using a calibration strip.

### [Modes of the Invention]

While the present invention may be modified in various ways and have various alternative forms, specific embodiments thereof will be described in detail below. However, there is no intent to limit the present invention to the specific embodiments, and it should be understood that the present invention covers all modifications, equivalents, and alternatives falling within the range of the spirit and scope of the present invention.

Although the terms "first," "second," and the like may be used herein to describe various elements, these elements should not be limited by these terms. These terms are only used to distinguish one element from another element. For example, a second element could be termed a first element, and a first element could similarly be termed a second element without departing from the scope of the present invention. The term "and/or" includes any one or any combination of a plurality of associated listed items.

When a first element is referred to as being "connected" or "coupled" to a second element, it will be understood that the first element may be directly connected or coupled to the second element, or a third element may be present therebetween. In contrast, when an element is referred to as being "directly connected" or "directly coupled" to another element, it will be understood that there are no intervening elements.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under the other element, such a description may include a case in which the one element is formed at an upper side or a lower side with respect to the other element.

The terminology used herein is for the purpose of describing particular embodiments only and is not intended to limit the present invention. The singular forms are intended to include the plural forms, unless the context clearly indicates otherwise. In the present specification, it should be further understood that the terms "comprise," "comprising," "include," and/or "including," when used herein, specify the presence of stated features, numbers, steps, operations, elements, components, and/or combinations thereof but do not preclude the presence or addition of one or more other features, numbers, steps, operations, elements, components, and/or combinations thereof.

Unless otherwise defined, all terms including technical and scientific terms used herein have meanings which are the same as meanings generally understood by those skilled in the art. Terms, such as those defined in commonly used dictionaries, should be interpreted as having meanings that are consistent with their meanings in the context of the relevant art and will not be interpreted in an idealized or overly formal sense unless expressly so defined here.

Hereinafter, when a calibration strip for an in vitro diagnostics device is described in detail with reference to the accompanying drawings, components that are the same or correspond to each other will be denoted by the same or corresponding reference numerals in all drawings, and redundant descriptions will be omitted.

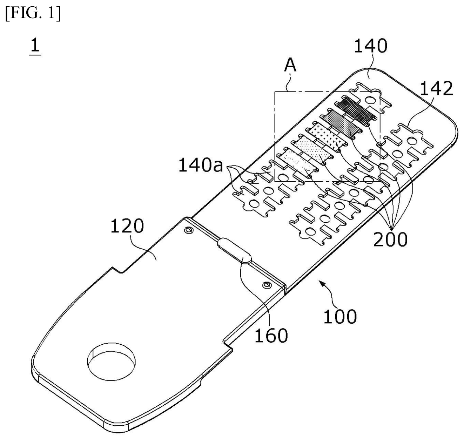

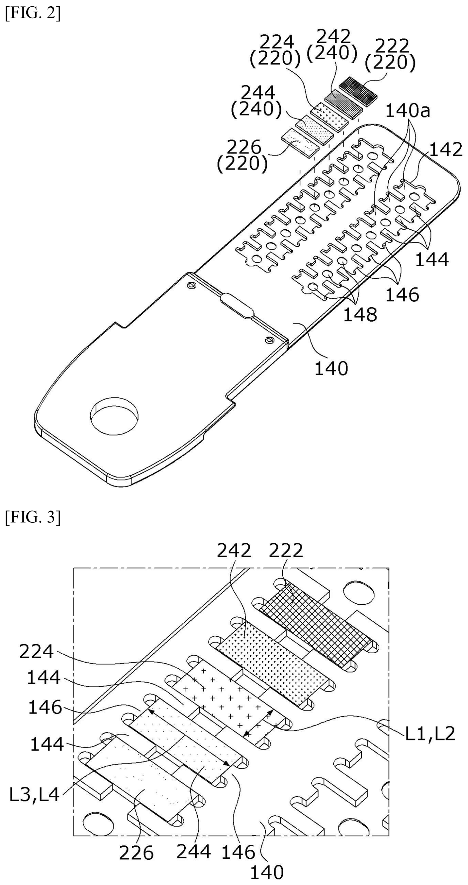

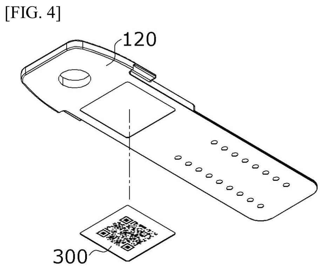

FIG. 1 is a perspective view illustrating a calibration strip for an in vitro diagnostics device according to one embodiment of the present invention, and FIG. 2 is an exploded perspective view illustrating the calibration strip for an in vitro diagnostics device according to one embodiment of the present invention. FIG. 3 is an enlarged view illustrating portion A of FIG. 1, and FIG. 4 is a bottom perspective view illustrating the calibration strip.

Referring to FIGS. 1 to 3, a calibration strip 1 for an in vitro diagnostics device according to one embodiment of the present invention may be mounted in an in vitro diagnostics device (not shown), and light generated by an optical module (not shown) disposed in the in vitro diagnostics device may be emitted to the calibration strip 1. The calibration strip 1 for an in vitro diagnostics device may include a strip body 100, a filter unit 200, and a bar code plate 300.

The strip body 100 may be a portion forming an exterior of the calibration strip 1, and the strip body 100 may be mounted in the in vitro diagnostics device. A plurality of cells 140a, which allow light generated by the optical module of the in vitro diagnostics device to pass therethrough when the calibration strip 1 is mounted in the in vitro diagnostics device, may be formed in the strip body 100.

The strip body 100 may include a handle 120, an arrangement portion 140, and a stopper 160.

The handle 120 is a portion that a user may hold. When the calibration strip 1 is mounted in the in vitro diagnostics device, the handle 120 may be disposed outside the in vitro diagnostics device. In this case, movement of the calibration strip 1 may be blocked by the stopper disposed between the handle 120 and the arrangement portion 140 to stop entrance of the calibration strip 1.

The arrangement portion 140 is a portion disposed in the in vitro diagnostics device when the calibration strip 1 is mounted in the in vitro diagnostics device. The filter unit 200 may be disposed on the arrangement portion 140. The arrangement portion 140 may include arrangement grooves 142, compartment protrusions 144, movement-preventing protrusions 146, and through holes 148.

The arrangement grooves 142 may be formed in the arrangement portion 140 in a longitudinal direction of the arrangement portion 140. In this case, the longitudinal direction may be a direction in which the calibration strip 1 is mounted in the in vitro diagnostics device. Each of the arrangement grooves 142 may have a rectangular shape, and a plurality of arrangement grooves 142 may be disposed in the arrangement portion 140 in a direction intersecting the longitudinal direction.

The compartment protrusions 144 may protrude such that the plurality of cells 140a are formed in the arrangement portion 140. More specifically, the compartment protrusions 144 may be provided as a pair of compartment protrusions 144 protruding from one inner surface and the other inner surface of the arrangement groove 142. The compartment protrusions 144 may protrude from the arrangement groove 142 toward an inner portion of the arrangement groove 142 in the direction intersecting the longitudinal direction. The pair of compartment protrusions 144 may be disposed to be spaced apart from each other in the arrangement groove 142 in the longitudinal direction. The compartment protrusions 144 may form a boundary in the arrangement groove 142 to form the plurality of cells 140a in the arrangement groove 142.

The movement-preventing protrusions 146 may be disposed in the arrangement groove 142. More specifically, as illustrated in FIGS. 1 to 3, the movement-preventing protrusions 146 may be disposed between the compartment protrusions 144. Each of the movement-preventing protrusions 146 may have a shape protruding from the arrangement groove 142 toward the inner portion of the arrangement groove 142 in the direction intersecting the longitudinal direction. The movement-preventing protrusion 146 may prevent movement of each of first filters 220 or second filters 240 which will be described below. The movement-preventing protrusion 146 may be formed to be shorter than the compartment protrusion 144. With the compartment protrusions 144, the movement-preventing protrusions 146 may define a size of each of the cells 140a formed by the compartment protrusions 144.

As illustrated in FIG. 3, a first length L1 of the cell 140a defined by the compartment protrusions 144 may be the same as a second length L2 of the first filter 220 or second filter 240. That is, when the first filter 220 or second filter 240 is disposed in the cell 140a, the first filter 220 or second filter 240 may be in contact with the compartment protrusion 144, and movement such as rotation of the first filter 220 or second filter 240 can be prevented. Accordingly, the reliability of a detection value detected through the first filter 220 or second filter 240 can be secured.

In addition, a third length L3 between the movement-preventing protrusions 146 facing each other may be the same as a fourth length L4 of the first filter 220 or second filter 240. Accordingly, like the case of the compartment protrusion 144, movement of the first filter 220 or second filter 240 disposed in each of the cells 140a can be prevented. Accordingly, the reliability of the detection value detected through the first filter 220 or second filter 240 can be secured.

The through holes 148 may be disposed in regions of the handle 120 in which the arrangement grooves 142 are formed. More specifically, the through holes 148 may be disposed in the cells 140a of the arrangement grooves 142 defined by the compartment protrusions 144. The plurality of through holes 148 may be formed in the arrangement portion 140. The through holes 148 may be closed by the filter unit 200 disposed in each of the cells 140a. The through holes 148 may expose the filter unit 200. The through holes 148 may allow light generated by the optical module disposed in the in vitro diagnostics device to pass therethrough.

The filter unit 200 may be sequentially disposed in the plurality of cells 140a formed in the arrangement portion 140 of the strip body 100. Light passing through the plurality of cells 140a may be emitted to the filter unit 200. The filter unit 200 may include the first filters 220 and the second filters 240. The first filters 220 and the second filters 240 may be rectangular-shaped plates. Each of the first filters 220 and the second filters 240 may be formed of a material with an optical density.

The first filter 220 may be disposed in each of the plurality of cells 140a. The first filters 220 may include a 1-1 filter 222, a 1-2 filter 224, and a 1-3 filter 226 which are disposed to be spaced apart from each other. As illustrated in FIG. 2, the 1-1 filter 222 may be disposed at an uppermost side of the first filters 220 and the second filters 240.

The 1-2 filter 224 may be disposed between the 1-1 filter 222 and the 1-3 filter 226. More specifically, as illustrated in FIG. 2, the 1-2 filter 224 may be disposed in the cell 140a two cells below the cell 140a in which the 1-1 filter 222 is disposed.

The 1-3 filter 226 may be disposed in the cell 140a two cells below the cell 140a in which the 1-2 filter 224 is disposed. The 1-3 filter 226 may be a filter disposed at a lowermost side of the first filters 220 and the second filters 240.

As illustrated in FIGS. 1 to 3, optical densities may gradually decrease from the 1-1 filter 222 to the 1-3 filter 226. That is, the 1-2 filter 224 may be a filter having a lower optical density than the 1-1 filter 222, and the 1-3 filter 226 may be a filter having a lower optical density than the 1-2 filter 224. In this case, the 1-2 filter 224 may have the optical density corresponding to a middle level of the optical density of the 1-1 filter 222 and the optical density of the 1-3 filter 226.

In the present embodiment, an example in which the optical densities gradually decrease from the 1-1 filter 222 to the 1-3 filter 226 has been described, but the present invention is not limited thereto. For example, optical densities may gradually increase from the 1-1 filter 222 to the 1-3 filter 226. That is, the 1-3 filter 226 may have a higher optical density than the 1-1 filter 222 and the 1-2 filter 224, and the 1-2 filter 224 may have a higher optical density than the 1-1 filter 222.

The second filters 240 may be disposed between the first filters 220. The second filters 240 may include a 2-1 filter 242 disposed between the 1-1 filter 222 and the 1-2 filter 224 and a 2-2 filter 244 disposed between the 1-2 filter 224 and the 1-3 filter 226.

More specifically, the 2-1 filter 242 may be disposed in the cell 140a disposed between the cell 140a in which the 1-1 filter 222 is disposed and the cell 140a in which the 1-2 filter 224 is disposed. In addition, the 2-2 filter 244 may be disposed in the cell 140a disposed between the cell 140a in which the 1-2 filter 224 is disposed and the cell 140a in which the 1-3 filter 226 is disposed. That is, the 2-1 filter 242 and the 2-2 filter 244 may be disposed to be spaced apart from each other with the 1-2 filter 224 interposed therebetween.

The 2-1 filter 242 may have a lower optical density than the 2-2 filter 244. However, the present invention is not limited thereto. For example, the 2-1 filter 242 may be a filter having a higher optical density than the 2-2 filter 244.

The 2-1 filter 242 may have an optical density which is lower than that of the 1-1 filter 222 and higher than that of the 1-2 filter 224. In addition, the 2-2 filter 244 may have an optical density which is lower than that of the 1-2 filter 224 and higher than that of the 1-3 filter 226. That is, the 1-1 filter 222, the 2-1 filter 242, the 1-2 filter 224, the 2-2 filter 244, and the 1-3 filter 226 may have optical densities which sequentially and gradually decrease. In addition, conversely, the 2-1 filter 242 may have an optical density which is higher than that of the 1-1 filter 222 and lower than that of the 1-2 filter 224, and the 2-2 filter 244 may have an optical density which is higher than that of the 1-2 filter 224 and lower than that of the 1-3 filter 226. That is, conversely with the previous case, the 1-1 filter 222, the 2-1 filter 242, the 1-2 filter 224, the 2-2 filter 244, and the 1-3 filter 226 may have optical densities which sequentially and gradually decrease.

In the present embodiment, an example in which the first filters 220 include three filters and the second filters 240 include two filters has been illustrated, but the present invention is not limited thereto. The first filters 220 may include three or more filters, and the second filters 240 may include two or more filters.

In addition, the numbers of the first filters 220 and the second filters 240 may be determined according to the number of the arrangement grooves 142. That is, the first filters 220 and the second filters 240 may include a total of eight filters, and the total number of the first filters 220 and the second filters 240 may be changed according to the number of the arrangement grooves 142 formed in the arrangement portion 140 of the strip body 100. More specifically, when ten or more arrangement grooves 142 are formed in the longitudinal direction, a total of ten or more of the first filters 220 and the second filters 240 may be provided. In addition, in the present embodiment, an example in which the 1-1 filter 222 is disposed at an uppermost side of the arrangement portion 140 of the strip body 100 among the first filters 220 and the second filters 240 has been illustrated, but the present invention is not limited thereto. The 1-3 filter 226 may be disposed at the uppermost side of the arrangement portion 140 of the strip body 100 among the first filters 220 and the second filters 240. In addition, the 2-1 filter 242 may be disposed above the 2-2 filter 244, and the 2-1 filter 242 may also be disposed below the 2-2 filter 244.

The first filters 220 and the second filters 240 may have different optical densities from each other. Accordingly, when light generated by the optical module disposed in the in vitro diagnostics device passes through the first filters 220 and the second filters 240, as many different calibration values as there are first filters 220 and second filters 240 may be generated for the same light.

More specifically, the light may pass through the 1-1 filter 222, the 1-2 filter 224, and the 1-3 filter 226 so that the calibration values may be generated, and the light may pass through the 2-1 filter 242 and the 2-2 filter 244 so that the calibration values may be generated. In this case, the values generated due to the 1-1 filter 222, the 1-2 filter 224, and the 1-3 filter 226 may become application values, and the values generated due to the 2-1 filter 242 and the 2-2 filter 244 may become non-application values.

The application values may be values derived when the calibration strip 1 is mounted in the in vitro diagnostics device (reference device), light is emitted once by the optical module and passes through the first filters 220 to derive calibration values, then the calibration strip 1, which was mounted in the reference device, is mounted in a different in vitro diagnostics device (target application device), and the calibration values are put into a calibration equation programmed in the target application device. In this case, the calibration equation may be a quadratic equation.

The non-application values may be values to be compared with the application values derived when the calibration strip 1 is mounted in the in vitro diagnostics device (reference device), the light is emitted by the optical module once and passes through the first filters 220 to derive the calibration values, then the calibration strip 1, which was mounted in the reference device, is mounted in the different in vitro diagnostics device (target application device), and the calibration values are put into the calibration equation programmed in the target application device. In this case, the calibration equation may be applied to the non-application values, and whether the same or similar values, which are compensated for the application values, are compensated for the non-application value to which the calibration equation is applied may be checked using the target application device.

The bar code plate 300 may be disposed in a hole formed in the handle 120 of the strip body 100. The bar code plate 300 may be formed as a combination of a plate portion disposed in the hole formed in the handle 120 and a bar code formed in the plate portion. The bar code plate 300 may store calibration values detected by the first filters 220 and the second filters 240 when light generated by the optical module is emitted to the calibration strip 1 mounted in the in vitro diagnostics device.

As described above, the calibration strip 1 for an in vitro diagnostics device according to one embodiment of the present invention, in which the first filters 220 and the second filters 240 are sequentially disposed and have different optical densities, can reduce a preparation time for calibration compared to the conventional calibration strip 1 of a method using a liquid in which a pigment is used, thereby having an effect of quickly deriving a detection result.

Hereinafter, a method of compensating for a difference in value between a plurality of in vitro diagnostics devices using the calibration strip 1 for an in vitro diagnostics device according to one embodiment of the present invention will be described.

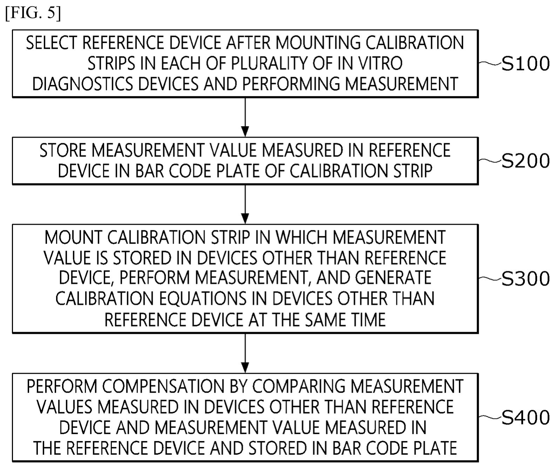

FIG. 5 is a flowchart illustrating a calibration method using a calibration strip.

Referring to FIG. 5, in the calibration method using the calibration strip 1, first, the calibration strip 1 is mounted in each of a plurality of in vitro diagnostics devices, the plurality of in vitro diagnostics devices are calibrated, and then a reference device is selected (S100). The selecting of the reference device may include mounting the calibration strips 1 in each of the plurality of in vitro diagnostics devices, calibrating the plurality of in vitro diagnostics devices, and selecting a device having a value which is most similar to an average value calculated by summing a highest value and a lowest value and dividing the resultant value in half.

Next, a calibration value with which the reference device is calibrated is stored in the bar code plate 300 of the calibration strip 1 (S200).

Next, the calibration strip 1 in which the calibration value is stored is mounted in the devices other than the reference device, the devices other than the reference device are calibrated, and calibration equations are generated in the devices other than the reference device at the same time (S300).

Next, calibration values with which the devices other than the reference device are calibrated (called "other device calibration values") and the calibration value with which the reference device is calibrated and which is stored in the bar code plate 300 (called "reference device calibration value"), are compared to perform a compensation operation (S400). In the comparing of the other device calibration values and the reference device calibration value in the present operation, an operation of compensating portions, at which differences occur when graph lines derived from the other device calibration values and a graph line derived from the reference device calibration value are compared, is performed. For example, in the compensation operation, a method of comparing two graph lines to compensate for a difference therebetween may be used. In this case, a range of the difference between two graph lines may have an absolute value from 1 to 65335, and two graph lines may have values between -500 and +500. When the difference and values exceed these ranges, recalibration may be performed using the calibration strip 1, or optical modules of the other devices may be rechecked and recalibration may be performed using the calibration strip 1.

As described above, a calibration result can be derived such that the plurality of other devices on which the calibration is performed have the same or similar values for one clinical specimen collected on one calibration strip 1.

While the present invention has been described above with reference to exemplary embodiments, it may be understood by those skilled in the art that various modifications and changes of the present invention may be made within a range not departing from the spirit and scope of the present invention defined by the appended claims. In addition, it should be interpreted that differences related to modifications and changes fall within the scope of the present invention defined by the appended claims.

### [Reference Numerals]

| | | | |
|---|---|---|---|
| 1: | CALIBRATION STRIP FOR IN VITRO DIAGNOSTICS DEVICE 100: STRIP | | |
| 120: | HANDLE | 140: | ARRANGEMENT PORTION |
| 140a: | CELL | 142: | ARRANGEMENT GROOVE |
| 144: | COMPARTMENT PROTRUSION | 146: | PROTRUSION MOVEMENT-PREVENTING |
| 148: | THROUGH HOLE | 160: | STOPPER |
| 200: | FILTER UNIT | 220: | FIRST FILTER |
| 222: | 1-1 FILTER | 224: | 1-2 FILTER |
| 226: | 1-3 FILTER | 240: | SECOND FILTER |
| 242: | 2-1 FILTER | 244: | 2-2 FILTER |
| 300: | BAR CODE PLATE | L1: | FIRST LENGTH |
| L2: | SECOND LENGTH | L3: | THIRD LENGTH |
| L4: | FOURTH LENGTH | | |

## Claims

1. A calibration strip for an in vitro diagnostics device, which is mounted in an in vitro diagnostics device, the calibration strip comprising:
a strip body including a plurality of cells through which light passes; and
a filter unit including first filters and second filters which are disposed in the plurality of cells.

2. The calibration strip of claim 1, wherein:
the first filters are sequentially disposed in the plurality of cells;
the second filters are disposed between the first filters; and
the first filters and the second filters have different optical densities.

3. The calibration strip of claim 2, wherein:
the first filters include a 1-1 filter, a 1-2 filter, and a 1-3 filter which are disposed to be spaced apart from each other; and
the optical densities gradually decrease from the 1-1 filter to the 1-3 filter.

4. The calibration strip of claim 2, wherein:
the first filters include a 1-1 filter, a 1-2 filter, and a 1-3 filter which are disposed to be spaced apart from each other; and
the optical densities gradually increase from the 1-1 filter to the 1-3 filter.

5. The calibration strip of claim 3 wherein the second filters include:
a 2-1 filter disposed between the 1-1 filter and the 1-2 filter; and
a 2-2 filter disposed between the 1-2 filter and the 1-3 filter,
wherein the optical density of the 2-1 filter is lower than that of the 2-2 filter.

6. The calibration strip of claim 4, wherein the second filters include:
a 2-1 filter disposed between the 1-1 filter and the 1-2 filter; and
a 2-2 filter disposed between the 1-2 filter and the 1-3 filter,
wherein the optical density of the 2-1 filter is higher than that of the 2-2 filter.

7. The calibration strip of claim 5, wherein:
the 2-1 filter has an optical density which is lower than that of the 1-1 filter and higher than that of the 1-2 filter; and
the 2-2 filter has an optical density which is lower than that of the 1-2 filter and higher than that of the 1-3 filter.

8. The calibration strip of claim 6, wherein:
the 2-1 filter has an optical density which is higher than that of the 1-1 filter and lower than that of the 1-2 filter; and
the 2-2 filter has an optical density which is higher than that of the 1-2 filter and lower than that of the 1-3 filter.

9. The calibration strip of claim 1, wherein:
the strip body includes compartment protrusions to form the plurality of cells; and
a first length of each of the cells is the same as a second length of each of the first filters or the second filters.

10. The calibration strip of claim 9, wherein:
the strip body includes movement-preventing protrusions which are disposed to face each other between the compartment protrusions and prevent movement of the first filters or the second filters; and
a third length between the movement-preventing protrusions facing each other is the same as a fourth length of the first filters or the second filters.

11. A calibration method comprising:
selecting a reference device after mounting a calibration strip in each of a plurality of in vitro diagnostics devices and performing measurement;
storing a measurement value measured in the reference device in a bar code plate of the calibration strip;
mounting the calibration strip, in which the measurement value is stored, in devices other than the reference device, performing measurement, and generating calibration equations in the devices other than the reference device at the same time; and
performing compensation by comparing measurement values measured in the devices other than the reference device and the measurement value measured in the reference device and stored in the bar code plate.

12. The calibration method of claim 11, wherein the selecting of the reference device after mounting the calibration strip in each of the plurality of in vitro diagnostics devices and performing the measurement includes mounting the calibration strip in each the plurality of in vitro diagnostics devices, performing measurement, and then selecting a device having a value which is most similar to an average value calculated by summing a highest value and a lowest value and dividing a resultant value in half.

13. The calibration method of claim 11, wherein the performing of the compensation by comparing the measurement values measured in the devices other than the reference device and the measurement value measured in the reference device and stored in the bar code plate includes compensating a portion at which a difference occurs when graph lines calculated using the measurement values of the devices other than the reference device and a graph line calculated using the measurement value of the reference device are compared.
